# EUROPEAN PATENT SPECIFICATION

(11) **EP 1 322 052 B1**
(45) Date of publication and mention of the grant of the patent: **30.04.2008**
(21) Application number: 02293000.2
(22) Date of filing: 05.12.2002
(51) Int. Cl.: H04B 10/08

(54) **Supervisory signalling for optical communications equipment**
Verfahren zur überwachende optischen Übertragung von Signalisierungsinformationen in optischen Verbindungen
Procédé de transmission optique monitoire d'informations de signalisation dans des liaisons optiques

(30) Priority: 18.12.2001 GB 0130214
(43) Date of publication of application: 25.06.2003
(73) Proprietor: Alcatel Lucent, 75008 Paris (FR)
(72) Inventor: Evans, Anthony John, Dartford, Kent DA1 2TT (GB); Willetts, Derek C., Wilminston, Kent OA1 2TE (GB)
(74) Representative: Shamsaei Far, Hassan

(56) References cited:
- EP-A- 0 812 078
- WO-A-01/71914
- WO-A-02/089366
- US-A- 6 111 687

## Description

The present invention relates to supervisory signalling for optical communications equipment. More particularly, it relates to a method and apparatus for supervisory signalling relating to submarine optical communications equipment on a submarine optical communications system.

Submarine optical transmission lines are used to transmit optical data signals. Typically, the transmission lines have the capacity to transmit high volumes of data. Conventional optical transmission systems usually include more than simply an optical transmission line with terminals at either end. Ancillary equipment and devices such as repeaters (for long distance propagation of the optical data signals), branching units, etc. are required in real life optical communication systems.

The high cost of submarine optical communication systems requires that the whole system is closely monitored in order to detect any abnormal behaviour. In addition, it is often desirable to monitor the normal operation of the system so that normal data transmission conditions can be assessed.

A branching unit, for example, may be used in a submarine environment to join one optical transmission line to another. It is sometimes necessary to switch an electrical power feed from one branch of a branching unit to another. Typically, this is carried out by a command from a terminal based on dry land. It is important to find out whether or not such a command has been carried out satisfactorily. For this reason, the branching unit has monitoring devices for monitoring the status of various aspects of the operation of the branching unit. These can detect failures in the operation of the branching unit but can also detect quantitatively measurable criteria of the performance of the branching unit.

For measurements of a branching unit's performance to be useful, information about those measurements must usually be transmitted to a terminal, typically on land. In that case, a communications link between the measurement devices and the terminal is required. The natural choice is to transmit the measurements as measurement signals (or "supervisory signals" or "status signals") along the optical transmission line itself. Status signals are signals which are ancillary to the main data signals, which indicate some aspect of the optical transmission system such as the quantity of operation of devices associated with the system.

As is well known, optical signals may be injected into the optical transmission line using pump lasers and coupling devices, the output of the pump lasers being modulated according to the supervisory signal.

However, the incorporation of such apparatus is expensive and time consuming. Additionally, pump lasers require significant power input and are difficult and expensive to replace in the event of failure.

A method for transmitting supervisory signal from fiber amplifier is know from US-A-6 111 687 wherein an optical band-pass filter, responsive to an external control signal, is used for modulating a signal passing through the fiber amplifier on a low frequency and amplitude such that this modulation does not disturb the actual data transmission. The control signal of the band-pass filter is used in the amplifier for modulating the output signal of the fiber amplifier at the rate of a supervisory message.

The problem to be addressed is, of course, not limited to branching units. Many apparatus associated with a submarine optical transmission system have their own acceptable performance limits. In addition, any failure of such apparatus must be notified to a terminal as soon as possible.

Accordingly, in a first aspect, the present invention provides a method of transmitting status information on an optical transmission line used to transmit a data signal, the method including the step of:-
applying a control signal to an optical attenuator through which the data signal passes,
wherein the attenuator modulates the data signal by a signal corresponding to the status information.

Preferably, the status information indicates a status of first apparatus coupled to the optical transmission line.

Preferably, the signal corresponding to the status information is characteristic of first apparatus.

Typically, the data signal may be modulated by a signal corresponding to status information indicating a status of second apparatus coupled to the optical transmission line. Preferably, the signal corresponding to the status information of the second apparatus is characteristic of the second apparatus.

Preferably, the first apparatus is one of a branching unit and an optical equaliser. The optical equaliser is preferably an active equaliser.

Preferably, the method includes the step of obtaining status information regarding apparatus associated with the optical transmission line.

The method typically includes the step of controlling the optical alternator via power control means.

Preferably, the method includes the step of providing status information about the quality of the data signal.

In a second aspect, the present invention provides an optical transmission system for transmitting status information, including an optical transmission line for carrying an optical data signal,
an optical attenuator adapted to allow the passage of the data signal through the same,
control means capable of applying a control signal to the optical attenuator,
wherein the optical attenuator is adapted for modulating the data signal by a signal corresponding to the status information, where in the optical attenuator, is adapted to have optical attenuation characteristics being substantially independent of the frequency of the data signal.

Preferably, the second aspect includes any of the features of the first aspect of the invention.

Typically, the status information is information regarding a branching unit coupled to the optical transmission line.

Alternatively, the status information is information regarding an optical equaliser coupled to the optical transmission line. Preferably, the optical equaliser is an active equaliser.

The system preferably includes status information control means. Additionally or alternatively, the system may include power control means for controlling the optical attenuator.

Preferably, the system includes means for taking a signal from the optical transmission line to provide status information about key system parameters.

Preferred embodiments of the invention will now be described, by way of example only, with reference to the accompanying drawings, in which:
Fig.1 shows a schematic representation of a typical status information input system according to the prior art.
Fig. 2 shows a schematic representation of an embodiment of a status information input system according to the present invention.
Fig. 3 is an example of data used by the present invention.

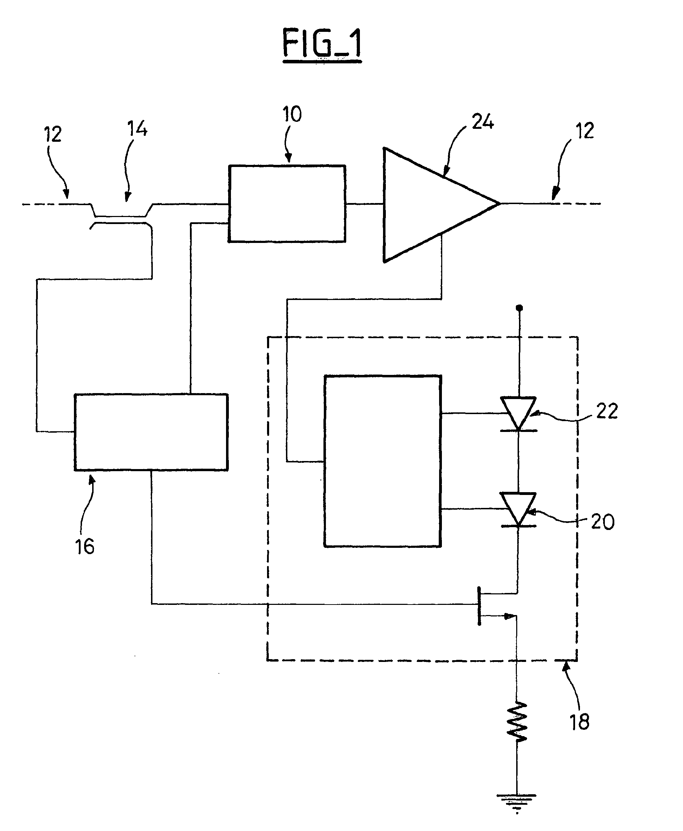

Fig. 1 represents a status information input system according to the prior art. The system here is used to provide status information about device 10. Device 10 may be, for example, a branching unit or an optical equaliser (these specific devices are discussed below) but the identity of device 10 is not essential to the operation of the prior art system or to the operation of the present invention.

Device 10 is located on an optical transmission line 12. In Fig. 1, a coupling device 14 takes a portion of the data signal being transmitted along transmission line 12. This portion of the data signal is fed to supervisory control means 16. Supervisory control means 16, in this example, measures properties of the data signal portion e.g. intensity, quality, etc.

In order to send a status information signal along the transmission line 12, supervisory control means 16 controls power control means 18. Power control means 18 includes pump lasers 20, 22. The output from the pump lasers 20, 22 is input into optical amplifier 24 located on the optical transmission line 12. The control of the power control means 18 by the supervisory control means 16 leads to a variation in the pump laser output which reaches amplifier 24. Thus, the gain of amplifier 24 is varied accordingly. This variation can give a measurable modulation in the intensity of the data signal which passes through amplifier 24. This modulation corresponds to the status information collected by the supervisory control means, e.g. the intensity of the data signal at optical coupler 14. Of course, alternatively, the status information could relate to some other aspect of device 10, for example its electrical power feed status.

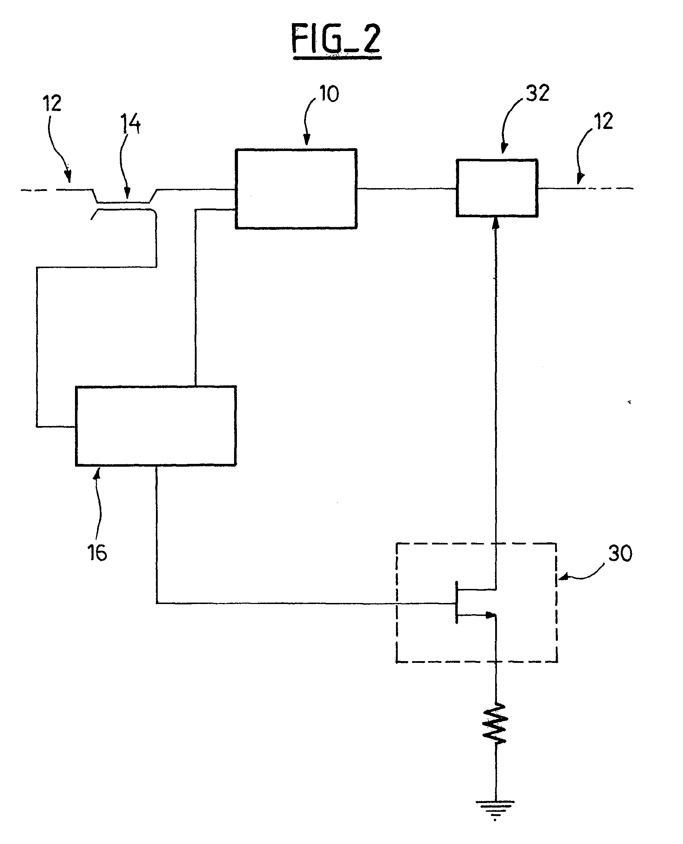

Fig. 2 represents a status information input system according to an embodiment of the present invention. Similarly to the prior art in this example, device 10 is supervised by supervisory control means 16, for example by sampling (via optical coupler 14) the data signal transmitted along the optical transmission line.

Supervisory control means 16 controls power control means 30. In turn, power control means 30 applies a control signal to optical attenuator 32 located on the optical transmission line. The intensity of the data signal on the optical transmission line is modulated according to the control signal applied to the optical attenuator 32.

Since the control signal is provided, indirectly, by the supervisory control means 16, the optical attenuator 32 can modulate the data signal by a signal corresponding to the status information collected by the supervisory control means 16.

The use of an optical attenuator 32 rather than an optical amplifier 24 means that pump lasers 20, 22 are not required. Pump lasers and optical amplifiers are expensive and difficult to maintain, and so the invention can give rise to a less expensive and more efficient optical transmission system.

An electromagnetic attenuator device may be used but components based on other technologies, i.e. Optoceramic, MEMs or Thermo-optic devices may be suitable.

For example, a suitable attenuator may have the following characteristics 0-10dB attenuation for 0 - 40mA, flatness 0.3dB and a 1535nm - 1568nm wavelength range. A further suitable example might be:-

| Item | Specification | Condition |
|---|---|---|
| Operating Wavelength (λ) | 1525-1570 nm | |
| Operating Temperature (Tₒₚ) | -2 to 43 Deg C | |
| Driving Current (I) | ≤ 70 mA | |
| Min. loss (Insertion loss at 0 mA) | ≤ 1.0 dB | |
| Attenuation Range | ≥ 10 dB | @ T_{op(-2 to 43 Deg C).}λ,I |
| Wavelength Dependant loss | ≤ 0.8 dB | Under 10 dB attenuation setting |
| Polarization Dependant Loss | ≤ 0.35 dB | |
| Polarization Mode Dispersion | ≤ 0.05 pS | |
| Return loss (Input and Output) | ≥ 50 dB | |
| Frequency range | To be defined. | |

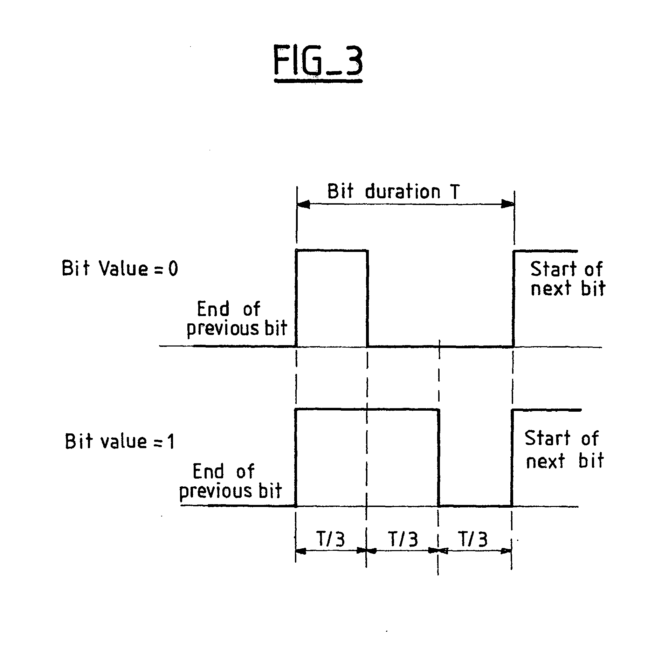

The basic data that originates from the unit to be interrogated is digital data e.g. a block of 22 digital bits, representing the address of the unit and the key system parameters. Each bit is encoded into a pulse width modulation (PWM) format as shown in Figure 3. The resultant data signal is used in turn to gate a digital carrier signal, which in turn would drive the modulation to the Optical attenuator. In general, the bias voltage or current through the VOA is altered in sympathy with the modulation signal as described above in order to achieve the desired return signalling.

In one embodiment, a branching unit is included in an optical communication system as device 10. A main optical transmission cable 12 is connected to the main terminal of the branching unit. The unit has two (or possibly more) branch terminals to which branch optical transmission cables are attachable.

The branching unit provides alternate paths for the optical data signals transmitted along the main optical transmission cables. In addition, the branching unit provides a path for a power feed along each respective branch. The power feed is required to power various devices along the system, such as repeaters, equalisers, etc. The power feed may be switched from one branch to another.

The branching unit includes detection means to detect the operational status of the unit. In particular, if the power feed has been switched from one branch to another, it is important for the switching to be verified. The detection means (typically including electronic detection circuitry) detects whether or not the required switching has occurred.

The detection means passes this information on to a control device such as supervisory control means 16. The supervisory control means sends an appropriate signal to power control means 30. The signal sent may be in the form of a digital or analogue wave form. The signal indicates the device (in this case the branching unit) to which it relates, and also the status information (in this case the fact that the power switching has occurred). Appropriate signal coding for digital information signalling is known and will not be discussed further here.

In normal operation, the optical transmission system transmits optical data signals. These data signals do not usually relate to the status of any device located on the system, but instead correspond to the data which the system carries from one user to another, e.g. a telephone conversation or other data transaction.

The signal applied to the optical attenuator 32 by the control means 30 leads to the optical attenuator applying a corresponding attenuation signal to the data signal. Thus, the attenuation signal results in a modulated data signal. The modulation consists of reducing the intensity of some parts of the data signal and not reducing the intensity of other parts of the data signal.

Clearly, reducing the intensity of the data signal to zero in parts could have the effect of losing some of the data in the data signal. Therefore the intensity reduction typically does not reduce the data signal intensity to zero. Instead, the intensity reduction of the modulation is usually in the range 0% to 20%, for example.

As is well known, the data band width of the signal is high due to the use of light (which has a relatively high frequency) and the use of techniques such as multiplexing. The device status information to be sent via the optical attenuator 32 is not particularly complex in comparison to the complexity (and volume) of data in the data signal. Accordingly, in analogue terms, the status information can be sent at low frequency (i.e. in a narrow band width). Thus, the modulation signal applied to the data signal typically has a relatively low frequency, or is the digital signal equivalent of a relatively low frequency analogue signal.

In this way, the status of the branching unit can be independently verified by the detector and the status signal applied to the data signal by the optical attenuator.

Of course, an alternative use of optical attenuation in a branching unit is to achieve a reduction in output light intensity of a branching unit. Clearly, this could be achieved by locating the optical attenuator in the branch of interest and applying a signal to activate the attenuator to reduce the output light intensity by a predetermined amount.

BU Output level control is particular desired feature of Add-Drop Branching Units. In this product a number of optical channels may be dropped off from the main data path to a third terminal. Channels at the same wavelength are re-inserted into the main path and may be equalized to the correct mean level with the through channels that had in trunk path. BU Output level control also gives scope to alter the actual number of channels added and dropped, from say 1-2 or 2-4 where again it would be necessary to make adjustment to channels in the trunk path.

Wavelength division multiplexing (WDM) is a well known method for sending large volumes of information along an optical transmission line. Using WDM, many different data channels are used which each correspond to light of slightly different wavelength. Each wavelength has a data signal applied to it and all the different wavelengths are sent down the same transmission line at once. The breadth of the spectrum (in terms of wavelength) sent down the optical transmission line may be from, say, 8nm to around 27nm. At the other end of the optical transmission system, the spectrum is de-multiplexed and the individual channels are separated again.

Due to absorption and other attenuation and variation effects, the intensity of the light signals varies with distance along the optical transmission line. The different wavelengths are not typically absorbed equally. This differential wavelength absorption can lead to a spectrum received at the other end of the optical transmission line which is more intense at certain wavelengths compared to others. It can be affected and accentuated by the different wavelength amplification characteristics of the optical amplifiers along the length of the optical transmission line. This non-uniformity of intensity of different channels can lead to data degradation or data loss and so needs to be addressed.

The problem is usually addressed using an equaliser. Effectively, this is an optical filter which removes the more intense parts of the received spectrum in order to achieve a more uniform spectrum. Additionally or alternatively, of course, the equaliser could amplify the less intense parts of the spectrum in order to achieve a more uniform spectrum.

If, for example, the absorption effects in the optical transmission line lead to a received signal which has a higher intensity on the lower wavelength channels and a lower intensity on the higher wavelength channels, then the equaliser can apply a filtering effect of opposing slope to the spectrum. As the name suggests, this has the effect of equalising the intensities of the channels across the spectrum.

Using an active equaliser, the slope applied to the received spectrum may be altered. Typically, this alteration may be achieved by applying a different DC voltage to the active equaliser. It is desirable to know the slope which is being applied to the spectrum, and therefore to know the voltage being applied to the active equaliser. The active equaliser is monitored using control circuitry. The status information gathered needs to be sent to a user terminal, as for the branching unit embodiment. One way to send a status information signal is by modulating the slope element itself (i.e. by modulating the dc voltage applied to the active equaliser). This will result in a periodic change in intensity of the data signal channels which can be received and interpreted.

However, the change in intensity will not be uniform across the channels. Changing the slope of the equaliser will raise the intensity of some channels, reduce the intensity of others and may not affect the intensity of one or more channels (typically near the centre of the spectrum). Therefore, the status information will need to be measured at a particular wavelength (i.e. on a particular channel) in order to be consistent, preferably a wavelength at an extreme of the WDM spectrum.

In contrast, another embodiment of the invention uses an optical attenuator 32 as described above to input a status information signal onto the data signal. The optical attenuator attenuates substantially all of the wavelengths of the WDM channels substantially by the same amount. Therefore the status information signal typically can be received and interpreted via any channel. As above, control circuitry can measure the status of the device, here the active equaliser, and input a corresponding signal onto the data signal being transmitted down the optical transmission line.

The present invention may also be used with optical amplifiers and/or repeaters.

Of course, the invention is not limited to the embodiments described here. In particular, other devices may be monitored and their status information is sent via an optical attenuator by modulating the data signals. Devices of interest include, for example, particular lengths of optical transmission line and repeaters. These embodiments, modifications thereof, further embodiments and modifications thereof will be obvious to the person skilled in the art and are therefore within the scope of this invention as defined by the claimed subject-matter.

## Claims

1. A method of transmitting status information on an optical transmission line (12) used to transmit a data signal, the method including the step of:-
applying a control signal to an optical attenuator (32) through which the data signal passes,
wherein the attenuator(32) modulates the data signal by a signal corresponding to the status information **characterised in that** the optical attenuation characteristics of the optical attenuator (32) are substantially independent of the frequency of the data signals.

2. A method according to claim 1 wherein the status information indicates a status of first apparatus (10) coupled to the optical transmission line (12).

3. A method according to claim 2 wherein the signal corresponding to the status information is characteristic of the first apparatus (10).

4. A method according to claim 3 wherein the data signal is modulated by a signal corresponding to status information indicating a status of second apparatus coupled to the optical transmission line.

5. A method according to claim 4 wherein the signal corresponding to the status information of the second apparatus is characteristic of the second apparatus.

6. A method according to any one of claims 2 to 5 wherein the first apparatus(10) is one of a branching unit and an optical equaliser.

7. A method according to any one of the preceding claims including the step of obtaining status information, regarding apparatus (10) associated witch the optical transmission line.

8. A method according to any one of the preceding claims including the step of controlling the optical attenuator (32) via power control means (30).

9. A method according to any one of the preceding claims including the step of providing status information about the quality of the data signal.

10. An optical transmission system for transmitting status information, including an optical transmission line (12) for carrying an optical data signal,
an optical attenuator (32) adapted to allow the passage of the data signal through the same,
control means (30) for applying a control signal to the optical attenuator (32),
wherein the optical attenuator is adapted for modulating the data signal by a signal corresponding to the status information **characterised in that** the optical attenuator (32) is adapted to have optical attenuation characteristics being substantially independent of the frequency of the data signal.

11. A system according to claim 10 including any of the features of the method of claims 1 to 9.

12. A system according to claim 10 or claim 11 wherein the status information is information regarding a branching unit coupled to the optical transmission line (12).

13. A system according to claim 10 or claim 11 wherein the status information is information regarding an optical equaliser coupled to the optical transmission line (12).

14. A system according to claim 13 wherein the optical equaliser is an active equaliser.

15. A system according to any one of claims 10 to 14 including status information measuring means(16).

16. A system according to any one of claims 10 to 15 including power control means for controlling the optical attenuator(30).

17. A system according to any one of claims 10 to 16 including means (14) for taking a signal from the optical transmission line (12) to provide status information about data signal quality.

## Patentansprüche

1. Verfahren zur Übermittlung von Statusinformationen über eine optische Übertragungsleitung (12), die zum Übertragen eines Datensignals dient, wobei das Verfahren den Schritt beinhaltet,
- ein optisches Dämpfungsglied (32), das vom Datensignal durchlaufen wird, mit einem Steuersignal zu beaufschlagen,
wobei das Dämpfungsglied (32) das Datensignal durch ein Signal moduliert, das der Statusinformation entspricht,
**dadurch gekennzeichnet, dass** die optischen Dämpfungseigenschaften des optischen Dämpfungsgliedes (32) im Wesentlichen von der Frequenz des Datensignals unabhängig sind.

2. Verfahren gemäß Anspruch 1, wobei die Statusinformation einen Status einer ersten Vorrichtung (10) angibt, die mit der optischen Übertragungsleitung (12) gekoppelt ist.

3. Verfahren gemäß Anspruch 2, wobei das Signal, das der Statusinformation entspricht, charakteristisch für die erste Vorrichtung (10) ist.

4. Verfahren gemäß Anspruch 3, wobei das Datensignal durch ein Signal moduliert wird, das der Statusinformation entspricht, die einen Status einer zweiten Vorrichtung angibt, die mit der optischen Übertragungsleitung gekoppelt ist.

5. Verfahren gemäß Anspruch 4, wobei das Signal, das der Statusinformation der zweiten Vorrichtung entspricht, charakteristisch für die zweite Vorrichtung ist.

6. Verfahren gemäß einem oder mehreren der Ansprüche 2 bis 5, wobei die erste Vorrichtung (10) eine Vorrichtung einer Abzweigeinheit und eines optischen Equalizers ist.

7. Verfahren gemäß einem oder mehreren der vorgenannten Ansprüche einschließlich des Schrittes zur Gewinnung von Statusinformationen im Hinblick auf die Vorrichtung (10), die der optischen Übertragungsleitung zugeordnet ist.

8. Verfahren gemäß einem oder mehreren der vorgenannten Ansprüche einschließlich des Schrittes, das optische Dämpfungsglied (32) über Leistungssteuerungsmittel (30) zu steuern.

9. Verfahren gemäß einem oder mehreren der vorgenannten Ansprüche einschließlich des Schrittes zur Bereitstellung von Statusinformationen über die Qualität des Datensignals.

10. Optisches Übertragungssystem zum Übertragen von Statusinformationen einschließlich einer optischen Übertragungsleitung (12) zum Übertragen eines optischen Datensignals,
eines optischen Dämpfungsgliedes (32), das so ausgelegt ist, dass es das Passieren des Datensignals durch dasselbe gestattet, und
Steuerungsmitteln (30), die in der Lage sind, das optische Dämpfungsglied (32) mit einem Steuersignal zu beaufschlagen,
wobei das optische Dämpfungsglied dafür ausgelegt ist, das Datensignal durch ein Signal zu modulieren, das der Statusinformation entspricht,
**dadurch gekennzeichnet, dass** das optische Dämpfungsglied (32) so ausgelegt ist, dass es optische Dämpfungseigenschaften besitzt, die im Wesentlichen von der Frequenz des Datensignals unabhängig sind.

11. System gemäß Anspruch 10 einschließlich beliebiger Merkmale des Verfahrens aus den Ansprüchen 1 bis 9.

12. System gemäß Anspruch 10 oder Anspruch 11, wobei die Statusinformation eine Information im Hinblick auf eine Abzweigeinheit ist, die mit der optischen Übertragungsleitung (12) gekoppelt ist.

13. System gemäß Anspruch 10 oder Anspruch 11, wobei die Statusinformation eine Information im Hinblick auf einen optischen Equalizer ist, der mit der optischen Übertragungsleitung (12) gekoppelt ist.

14. System gemäß Anspruch 13, wobei der optische Equalizer ein aktiver Equalizer ist.

15. System gemäß einem oder mehreren der Ansprüche 10 bis 14 einschließlich Mitteln (16) zum Messen von Statusinformationen.

16. System gemäß einem oder mehreren der Ansprüche 10 bis 15 einschließlich Leistungssteuerungsmitteln (30) zum Steuern des optischen Dämpfungsgliedes.

17. System gemäß einem oder mehreren der Ansprüche 10 bis 16 einschließlich Mitteln (14) zum Abzweigen eines Signals aus der optischen Übertragungsleitung (12) zur Bereitstellung von Statusinformationen über die Qualität des Datensignals.

## Revendications

1. Procédé destiné à la transmission des informations d'état sur une ligne de transmission optique (12) utilisée pour transmettre un signal de données, le procédé comprenant l'étape suivante :
appliquer un signal de commande à un atténuateur optique (32) à travers lequel le signal de données passe,
dans lequel l'atténuateur (32) module le signal de données par un signal correspondant aux informations d'état, **caractérisé en ce que** les caractéristiques d'atténuation optique de l'atténuateur optique (32) sont sensiblement indépendantes de la fréquence du signal de données.

2. Procédé selon la revendication 1 dans lequel les informations d'état indiquent un état du premier appareil (10) couplé à la ligne de transmission optique (12).

3. Procédé selon la revendication 2 dans lequel le signal correspondant aux informations d'état est caractéristique du premier appareil (10).

4. Procédé selon la revendication 3 dans lequel le signal de données est modulé par un signal correspondant aux informations d'état indiquant un état du second appareil couplé à la ligne de transmission optique.

5. Procédé selon la revendication 4 dans lequel le signal correspondant aux informations d'état du second appareil est caractéristique du second appareil.

6. Procédé selon l'une quelconque des revendications 2 à 5 dans lequel le premier appareil (10) est l'une d'une unité de branchement et un correcteur de fréquence optique.

7. Procédé selon l'une quelconque des revendications précédentes incluant l'étape d'obtention des informations d'état concernant l'appareil (10) associé à la ligne de transmission optique.

8. Procédé selon l'une quelconque des revendications précédentes incluant l'étape de commande de l'atténuateur optique (32) via des moyens de commande de puissance (30).

9. Procédé selon l'une quelconque des revendications précédentes incluant l'étape de fourniture des informations d'état sur la qualité du signal de données.

10. Système de transmission optique destiné à la transmission d'informations d'état, incluant une ligne de transmission optique (12) destinée à porter un signal de données optique,
un atténuateur optique (32) adapté pour permettre le passage du signal de données à travers celui-ci,
des moyens de commande (30) destinés à appliquer un signal de commande à l'atténuateur optique (32),
dans lequel l'atténuateur optique est adapté pour moduler le signal de données par un signal correspondant aux informations d'état, **caractérisé en ce que** l'atténuateur optique (32) est adapté pour avoir des caractéristiques d'atténuation optique sensiblement indépendantes de la fréquence du signal de données.

11. Système selon la revendication 10 incluant l'une quelconque des caractéristiques du procédé des revendications 1 à 9.

12. Système selon la revendication 10 ou 11 dans lequel les informations d'état sont des informations concernant une unité de branchement couplée à la ligne de transmission optique (12).

13. Système selon la revendication 10 ou 11 dans lequel les informations d'état sont des informations concernant un correcteur de fréquence optique couplé à la ligne de transmission optique (12).

14. Système selon la revendication 13 dans lequel le correcteur de fréquence optique est un correcteur de fréquence actif.

15. Système selon l'une quelconque des revendications précédentes 10 à 14 incluant des moyens de mesure (16) des informations d'état.

16. Système selon l'une quelconque des revendications précédentes 10 à 15 incluant des moyens de commande de puissance du système destinés à surveiller l'atténuateur optique (30).

17. Système selon l'une quelconque des revendications précédentes 10 à 16 incluant des moyens de commande de puissance (14) destinés à prendre un signal de ligne de la ligne de transmission (12) pour fournir des informations d'état sur la qualité du signal de données.
